# EUROPÄISCHE PATENTSCHRIFT

(11) **EP 2 992 747 B1**
(45) Veröffentlichungstag und Bekanntmachung des Hinweises auf die Patenterteilung: **22.11.2017**
(21) Anmeldenummer: 15181735.0
(22) Anmeldetag: 20.08.2015
(51) Int. Cl.: A01B 59/043, A01B 59/06

(54) **HALTEEINRICHTUNG FÜR EINEN UNTERLENKER EINES DREIPUNKTGERÄTEANBAUS EINES LANDWIRTSCHAFTLICHEN TRAKTORS**
HOLDING DEVICE FOR A LOWER LINK OF A THREE-POINT DEVICE OF AN AGRICULTURAL TRACTOR
DISPOSITIF DE FIXATION POUR UNE BARRE INFÉRIEURE D'UN ATTELAGE TROIS POINT D'UN TRACTEUR AGRICOLE

(30) Priorität: 08.09.2014 DE 102014217902
(43) Veröffentlichungstag der Anmeldung: 09.03.2016
(73) Patentinhaber: Deere & Company, Moline, IL 61265 (US)
(72) Erfinder: Heitlinger, Martin, 76684 Östringen (DE)
(74) Vertreter: Dehnhardt, Florian Christopher

(56) Entgegenhaltungen:
- CA-A1- 2 168 308
- DE-B1- 2 435 477
- FR-A1- 2 857 821
- US-A- 2 587 763

## Beschreibung

Die Erfindung betrifft eine Halteeinrichtung für einen Unterlenker eines Dreipunktgeräteanbaus eines landwirtschaftlichen Traktors, umfassend ein bogenförmiges Halteelement, das einen ersten Schenkel mit einem Kupplungselement zur Anbringung des Unterlenkers, einen zweiten Schenkel, und ein die beiden Schenkel verbindendes Zwischenstück aufweist.

Aus der DE 24 35 477 B1 geht eine Geräteanbauvorrichtung zur Abstützung eines Oberlenkers gegenüber den Unterlenkern an einem Dreipunktgeräteanbau hervor. Die Geräteanbauvorrichtung umfasst zwei bogenförmig vorgeformte Blattfedern, die in einem ersten Endbereich mittels zugehöriger Verbindungsbolzen an den Unterlenkern und in einem zweiten Endbereich mittels einer die Blattfedern verbindenden Traverse an dem Oberlenker angebracht sind.

Zur vereinfachten Anbringung unterschiedlicher landwirtschaftlicher Anbaugeräte sind landwirtschaftliche Traktoren typischerweise mit einem Dreipunktgeräteanbau ausgestattet. Der Dreipunktgeräteanbau umfasst einen bezüglich seiner Länge verstellbaren Oberlenker sowie zwei starre Unterlenker. Zum Anheben bzw. Absenken eines an dem Dreipunktgeräteanbau anbringbaren landwirtschaftlichen Anbaugeräts sind die Ober- und Unterlenker vertikal verschwenkbar im Heckbereich des landwirtschaftlichen Traktors befestigt, wobei die Verschwenkung nach Maßgabe einer entsprechenden Fahreranforderung mittels eines an den Unterlenkern angreifenden Hubmechanismus erfolgt. Der Hubmechanismus umfasst hydraulisch betätigbare Hubarme, deren Schwenkbewegung mittels zugehöriger Hubspindeln auf die Unterlenker übertragen wird.

Im Allgemeinen ist in einem unteren Bereich des Dreipunktgeräteanbaus zusätzlich ein Zugmaul zur Anbringung eines Anhängers vorgesehen. Um ein seitliches Hin- und Herschwenken einer in das Zugmaul eingehängten Anhängerdeichsel zu ermöglichen, sind die Unterlenker aus dem Schwenkbereich der Anhängerdeichsel heraus in eine angehobene Stellung zu verbringen. Da sich die Unterlenker aufgrund baulicher Gegebenheiten des Hubmechanismus, insbesondere aufgrund des zur Verfügung stehenden Verstellwegs bzw. des spezifischen Anbringungsorts von zur hydraulischen Betätigung der Hubarme verwendeten Hydraulikzylindern lediglich in begrenztem Umfang anheben lassen, ergeben sich aufgrund des insofern begrenzten seitlichen Freiraums im Bereich der Anhängerdeichsel entsprechende Einschränkungen hinsichtlich des zulässigen Knickwinkels und damit der Wendigkeit eines aus landwirtschaftlichem Traktor und Anhänger bestehenden Fahrzeuggespanns.

Angesichts dessen ist es Aufgabe der vorliegenden Erfindung, eine Möglichkeit zur Verbesserung der Wendigkeit eines mit einem Dreipunktgeräteanbau ausgestatteten landwirtschaftlichen Traktors insbesondere bei der Durchführung von Transportfahrten mit einem Anhänger zu schaffen.

Diese Aufgabe wird durch eine Halteeinrichtung für einen Unterlenker eines Dreipunktgeräteanbaus eines landwirtschaftlichen Traktors mit den Merkmalen des Patentanspruchs 1 gelöst.

Die erfindungsgemäße Halteeinrichtung für einen Unterlenker eines Dreipunktgeräteanbaus eines landwirtschaftlichen Traktors umfasst ein bogenförmiges Halteelement, das einen ersten Schenkel mit einem Kupplungselement zur Anbringung des Unterlenkers, einen zweiten Schenkel mit einem sich in Richtung des ersten Schenkels erstreckenden Widerlager, und ein die beiden Schenkel verbindendes Zwischenstück aufweist, wobei das Zwischenstück drehbeweglich derart an einer Hubspindel des Dreipunktgeräteanbaus befestigbar ist, dass das an dem zweiten Schenkel vorgesehene Widerlager bei an dem ersten Schenkel angebrachtem Unterlenker unter der Wirkung der Schwerkraft derart gegen eine Oberseite der Hubspindel gepresst wird, dass der Unterlenker in einer vorgegebenen angehobenen Stellung gehalten wird.

Genauer gesagt läuft das bogenförmige Halteelement entlang der beiden Schenkel in ein jeweils zugehöriges freies Ende aus, wobei dem freien Ende des ersten Schenkels das Kupplungselement und dem freien Ende des zweiten Schenkels das Widerlager zugeordnet ist. Durch entsprechende Wahl der Geometrieverhältnisse der beiden Schenkel bzw. des Zwischenstücks lässt sich der Unterlenker mittels der erfindungsgemäßen Halteeinrichtung in eine von den baulichen Gegebenheiten des Hubmechanismus des Dreipunktgeräteanbaus unabhängige, insbesondere darüber hinausgehende angehobene Stellung verbringen. Der dadurch geschaffene zusätzliche seitliche Freiraum im Bereich der Anhängerdeichsel führt zu einer Erhöhung des zulässigen Knickwinkels und damit zu einer entsprechenden Verbesserung der Wendigkeit eines aus landwirtschaftlichem Traktor und Anhänger bestehenden Fahrzeuggespanns.

Für jeden der beiden Unterlenker ist eine separate Halteeinrichtung vorzusehen, wobei zum Einbau der Halteeinrichtung die Hubspindel zunächst durch Entfernen eines zugehörigen Sicherungselements vom Unterlenker zu lösen ist, der Unterlenker vorübergehend auf dem Boden oder einem Bock abgelegt sowie die Halteeinrichtung anstelle des Unterlenkers mit ihrem Zwischenstück an der Hubspindel befestigt wird. Danach wird die Halteeinrichtung mittels des Kupplungselements am Unterlenker angebracht.

Um einer möglichen Überlastung der Halteeinrichtung vorzubeugen, ist in diesem Zustand eine Verwendung landwirtschaftlicher Anbaugeräte am Dreipunktgeräteanbau nicht mehr möglich, die Halteeinrichtung ist zuvor in umgekehrter Reihenfolge auszubauen. Vorteilhafte Ausführungen der erfindungsgemäßen Halteeinrichtung gehen aus den Unteransprüchen hervor.

Die Hubspindeln gängiger Dreipunktgeräteanbauten weisen in aller Regel ein ösenförmiges Befestigungsende zur Anbringung des Unterlenkers mittels eines Sicherungselements in Gestalt eines abnehmbaren Sicherungsbolzens auf. Das ösenförmige Befestigungsende lässt sich dementsprechend bei abgenommenem Unterlenker zum Zwecke der Befestigung der Halteeinrichtung nutzen. Vorzugsweise ist daher in dem Zwischenstück eine Bolzenaufnahmeöffnung zur Anbringung eines ösenförmigen Befestigungsendes der Hubspindel des Dreipunktgeräteanbaus ausgebildet.

Ähnliche Betrachtungen gelten für die Anbringung der Unterlenker des Dreipunktgeräteanbaus. Diese sind üblicherweise an einem freien Ende mit Fanghaken zur Aufnahme zugehöriger Kupplungskugeln bzw. im Falle von als Teleskop- bzw. Kugelunterlenker ausgebildeten Unterlenkern mit Kugelaugen zur Aufnahme zugehöriger Kupplungsbolzen einer Anbaugeräteschnittstelle eines an dem Dreipunktgeräteanbau anbringbaren landwirtschaftlichen Anbaugeräts ausgestattet. Dementsprechend ist es von Vorteil, wenn es sich bei dem Kupplungselement um eine Kupplungskugel oder einen Kupplungsbolzen handelt, wobei die Kupplungskugel oder der Kupplungsbolzen zur Anbringung des Unterlenkers mittels eines an einem freien Ende des Unterlenkers angeordneten Fanghakens oder Kugelauges dient. Die Abmessungen der Kupplungskugel oder des Kupplungsbolzens sind hierbei von der Kategorie des verwendeten Dreipunktgeräteanbaus abhängig und werden dementsprechend vorgegeben. Die Kupplungskugel bzw. der Kupplungsbolzen kann dabei in einer am freien Ende des ersten Schenkels vorgesehenen gabelförmigen Halterung aufgenommen sein.

Um eine Beschädigung der Oberseite der Hubspindel aufgrund fahrtbedingt auftretender Bewegungen zwischen Hubspindel und Widerlager zu vermeiden, besteht die Möglichkeit, dass es sich bei dem Widerlager um ein aus elastischem Material hergestelltes Federelement handelt. Die Verwendung elastischen Materials erlaubt es ferner, die Hubspindel durch Kompression des Widerlagers stabilisierend gegenüber der Halteeinrichtung durch Anheben der Unterlenker mittels des Hubmechanismus des Dreipunktgeräteanbaus ohne Gefahr möglicher Beschädigungen zu verspannen.

Das Federelement ist im einfachsten Fall als blockförmiger Gummipuffer ausgebildet. Der blockförmige Gummipuffer ist beispielsweise mittels eines einvulkanisierten Befestigungselements in Gestalt einer Schraube oder dergleichen mit dem zweiten Schenkel des bogenförmigen Halteelements verbunden. Hierbei sei angemerkt, dass das Federelement grundsätzlich auch eine beliebige andere Ausgestaltung aufweisen kann, so kann es sich beispielsweise um eine an dem zweiten Schenkel des bogenförmigen Halteelements angebrachte Spiralfeder oder um ein elastisch nachgiebiges Kunststoffelement handeln.

Im Sinne einer möglichst hohen Belastbarkeit der Halteeinrichtung kann das bogenförmige Halteelement als aus Stahl bestehendes einstückiges Guss- und/oder Schmiedeteil hergestellt sein. Alternativ ist jedoch auch ein mehrteiliger Aufbau denkbar.

Die erfindungsgemäße Halteeinrichtung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein Ausführungsbeispiel der erfindungsgemäßen Halteeinrichtung für einen Unterlenker eines Dreipunktgeräteanbaus eines landwirtschaftlichen Traktors, und
- Fig. 2: das in Fig. 1 dargestellte Ausführungsbeispiel der erfindungsgemäßen Halteeinrichtung in ein- bzw. ausgebautem Zustand an einem Dreipunktgeräteanbau eines landwirtschaftlichen Traktors.

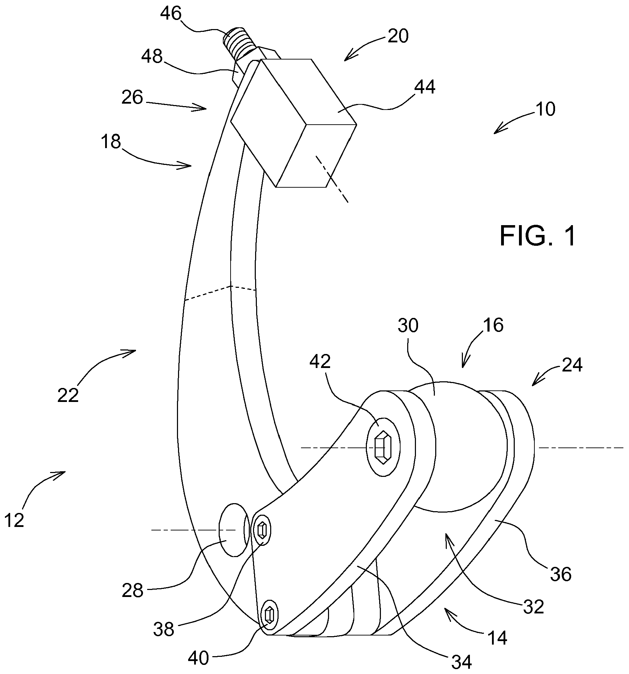

Fig. 1 zeigt ein Ausführungsbeispiel der erfindungsgemäßen Halteeinrichtung für einen Unterlenker eines Dreipunktgeräteanbaus eines landwirtschaftlichen Traktors.

Die Halteeinrichtung 10 umfasst ein bogenförmiges Halteelement 12, das einen ersten Schenkel 14 mit einem Kupplungselement 16 zur Anbringung des Unterlenkers, einen zweiten Schenkel 18 mit einem sich in Richtung des ersten Schenkels 14 erstreckenden Widerlager 20, und ein die beiden Schenkel 14, 18 verbindendes Zwischenstück 22 aufweist. Das bogenförmige Halteelement 12 läuft entlang der beiden Schenkel 14, 18 in ein jeweils zugehöriges freies Ende 24, 26 aus, wobei dem freien Ende 24 des ersten Schenkels 14 das Kupplungselement 16 und dem freien Ende 26 des zweiten Schenkels 18 das Widerlager 20 zugeordnet ist.

In dem Zwischenstück 22 ist eine Bolzenaufnahmeöffnung 28 zur Anbringung eines ösenförmigen Befestigungsendes einer Hubspindel des Dreipunktgeräteanbaus ausgebildet. Beispielsgemäß befindet sich die Bolzenaufnahmeöffnung 28 entlang des Verlaufs des bogenförmigen Halteelements 12 gesehen im Wesentlichen in der Mitte zwischen Widerlager 20 und Kupplungselement 16.

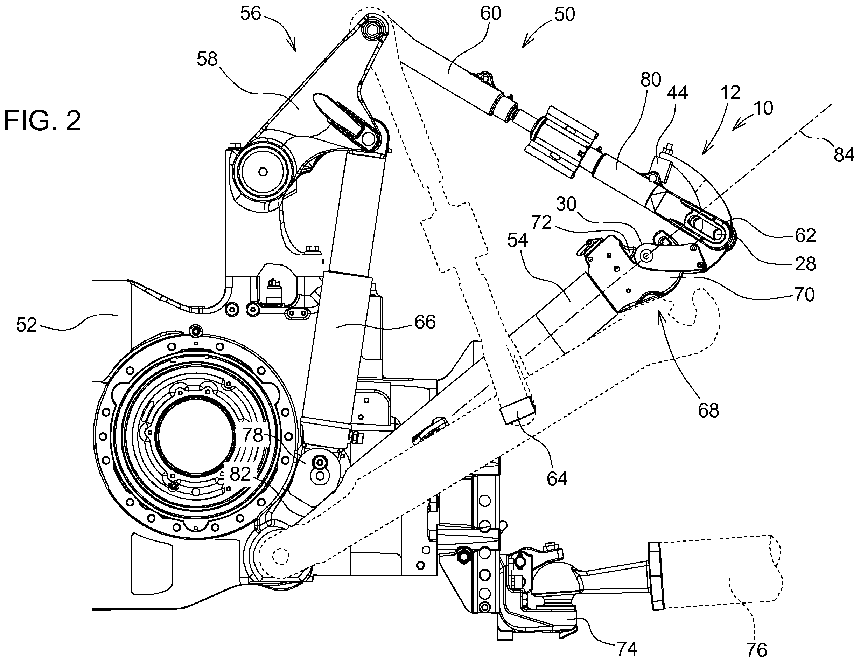

Bei dem Kupplungselement 16 handelt es sich um eine Kupplungskugel 30, wobei die Kupplungskugel 30 zur Anbringung des Unterlenkers mittels eines an einem freien Ende des Unterlenkers befindlichen Fanghakens dient (siehe Fig. 2).

Gemäß einer nicht dargestellten alternativen Ausgestaltung der Halteeinrichtung 10 kann im Falle eines als Teleskop- oder Kugelunterlenker ausgebildeten Unterlenkers anstelle der Kupplungskugel 30 auch ein Kupplungsbolzen vorgesehen sein, wobei der Kupplungsbolzen zur Anbringung des Unterlenkers mittels eines an einem freien Ende des Unterlenkers angeordneten Kugelauges dient.

Die Kupplungskugel 30 ist in einer am freien Ende 24 des ersten Schenkels 14 vorgesehenen gabelförmigen Halterung 32 aufgenommen. Die gabelförmige Halterung 32 ist vorliegend durch zwei parallel zueinander verlaufende Halteplatten 34, 36 gebildet, die mittels zugehöriger Gewindebolzen 38, 40 an dem Zwischenstück 22 befestigt sind. Ein sich durch die beiden Halteplatten 34, 36 sowie die Kupplungskugel 30 erstreckender weiterer Gewindebolzen 42 dient der Befestigung der Kupplungskugel 30. Die Abmessungen der Kupplungskugel 30 sind hierbei von der Kategorie des verwendeten Dreipunktgeräteanbaus abhängig und werden dementsprechend vorgegeben.

Es sei angemerkt, dass das bogenförmige Halteelement 12 anstelle des dargestellten mehrteiligen Aufbaus auch einen einstückigen Aufbau in Gestalt eines aus Stahl bestehenden Guss- und/oder Schmiedeteils aufweisen kann.

Bei dem Widerlager 20 handelt es sich um ein aus elastischem Material hergestelltes Federelement. Beispielsgemäß ist das Federelement als blockförmiger Gummipuffer 44 ausgebildet. Der blockförmige Gummipuffer 44 ist mittels eines einvulkanisierten Befestigungselements in Gestalt einer Schraube 46 mit dem freien Ende 26 des zweiten Schenkels 18 verbunden. Die Schraube 46 erstreckt sich durch das freie Ende 26 des zweiten Schenkels 18 und ist auf der dem blockförmigen Gummipuffer 44 abgewandten Seite mittels einer zugehörigen Gegenmutter 48 gesichert.

In Fig. 2 ist die Halteeinrichtung 10 in eingebautem sowie - der besseren Verständlichkeit wegen - in strichlinierter Darstellung in ausgebautem Zustand an einem Dreipunktgeräteanbau 50 eines landwirtschaftlichen Traktors gezeigt, wobei von dem landwirtschaftlichen Traktor lediglich ein im Heckbereich befindliches Differentialgehäuse 52 wiedergegeben ist.

Der Dreipunktgeräteanbau 50 ist von herkömmlicher Bauart und umfasst einen bezüglich seiner Länge verstellbaren, aus Gründen der Übersichtlichkeit in Fig. 2 nicht wiedergegebenen Oberlenker sowie zwei starre Unterlenker 54. Zum Anheben bzw. Absenken eines an dem Dreipunktgeräteanbau 50 anbringbaren landwirtschaftlichen Anbaugeräts sind der Oberlenker wie auch die Unterlenker 54 vertikal verschwenkbar am Differentialgehäuse 52 des landwirtschaftlichen Traktors befestigt. Die Verschwenkung erfolgt nach Maßgabe einer entsprechenden Fahreranforderung mittels eines an den Unterlenkern 54 angreifenden Hubmechanismus 56. Der Hubmechanismus 56 umfasst hydraulisch betätigbare Hubarme 58, deren Schwenkbewegung mittels zugehöriger Hubspindeln 60 auf die Unterlenker 54 übertragen wird. Jede der Hubspindeln 60 weist ein ösenförmiges Befestigungsende 62 zur Anbringung eines zugehörigen Unterlenkers 54 mittels eines Sicherungselements in Gestalt eines abnehmbaren Sicherungsbolzens 64 auf. Die hydraulische Betätigung des Hubmechanismus 56 erfolgt im vorliegenden Fall mittels zwischen den Hubarmen 58 und dem Differentialgehäuse 52 verlaufenden Hydraulikzylindern 66, die sich durch Betätigung einer in dem landwirtschaftlichen Traktor untergebrachten Hydrauliksteuerung ein- und ausfahren lassen.

Des Weiteren sind die Unterlenker 54 an einem freien Ende 68 mit Fanghaken 70 zur Aufnahme zugehöriger Kupplungskugeln einer Anbaugeräteschnittstelle eines an dem Dreipunktgeräteanbau 50 anbringbaren landwirtschaftlichen Anbaugeräts ausgestattet. Ein in dem Fanghaken 70 vorgesehener Schnappmechanismus 72 dient der Verriegelung der Kupplungskugel.

Wie in Fig. 2 zu erkennen ist, ist im unteren Bereich des Dreipunktgeräteanbaus 50 zusätzlich ein Zugmaul 74 zur Anbringung eines Anhängers vorgesehen. Um ein seitliches Hin- und Herschwenken einer in das Zugmaul 74 eingehängten Anhängerdeichsel 76 zu ermöglichen, sind die Unterlenker 54 aus dem Schwenkbereich der Anhängerdeichsel 76 in eine angehobene Stellung zu verbringen. Die baulichen Gegebenheiten des Hubmechanismus 56, insbesondere der zur Verfügung stehende Verstellweg bzw. der Anbringungsort der zur hydraulischen Betätigung der Hubarme 58 vorgesehenen Hydraulikzylinder 66 zwischen Hubarm 58 und Befestigungsflansch 78 erlauben ein Anheben der Unterlenker 54 lediglich in dem in Fig. 2 strichliniert dargestellten begrenzten Umfang.

Durch Einbau der Halteeinrichtung 10 ist es möglich, die Unterlenker 54 in eine darüber hinausgehende angehobene Stellung zu versetzen, wobei für jeden der beiden Unterlenker 54 eine separate Halteeinrichtung 10 vorzusehen ist. Hierzu ist zunächst die Hubspindel 60 durch Entfernen des Sicherungsbolzens 64 vom Unterlenker 54 zu lösen. Anschließend wird der Unterlenker 54 vorübergehend auf dem Boden oder einem Bock abgelegt sowie die Halteeinrichtung 10 anstelle des Unterlenkers 54 mit ihrem Zwischenstück 22 an der Hubspindel 60 angebracht, wozu der Sicherungsbolzen 64 durch das ösenförmigen Befestigungsende 62 sowie die Bolzenaufnahmeöffnung 28 des Zwischenstücks 22 hindurchgesteckt wird. Das Zwischenstück 22 ist auf diese Weise drehbeweglich an der Hubspindel 60 des Dreipunktgeräteanbaus 50 befestigt. Die Hubspindel 60 ist bezüglich ihrer Länge verstellbar ausgebildet, wobei diese gegebenenfalls auf ihr kürzestes Maß eingestellt wird. Danach wird die Halteeinrichtung 10 durch Einrasten der Kupplungskugel 30 im Fanghaken 70 am Unterlenker 54 angebracht Anschließend wird der Unterlenker 54 losgelassen, wobei das Widerlager 20 unter der Wirkung der Schwerkraft derart gegen eine Oberseite 80 der Hubspindel 60 gepresst wird, dass der Unterlenker 54 in einer vorgegebenen angehobenen Stellung gehalten wird.

Um einer möglichen Überlastung der Halteeinrichtung 10 vorzubeugen, ist in diesem Zustand eine Verwendung landwirtschaftlicher Anbaugeräte am Dreipunktgeräteanbau 50 nicht mehr möglich, die Halteeinrichtung 10 ist zuvor in umgekehrter Reihenfolge auszubauen.

Der Einbau der Halteeinrichtung 10 gelingt am einfachsten in einer abgesenkten Stellung der Unterlenker 54. Das anschließende Anheben der Unterlenker 54 erfolgt dann mittels des Hubmechanismus 56 des Dreipunktgeräteanbaus 50, und zwar gemäß Fig. 2 bis zum Erreichen eines durch den Befestigungsflansch 78 des Hydraulikzylinders 66 gegebenen baulichen Anschlag am Differentialgehäuse 52, wobei zugleich die Hubspindel 60 durch Kompression des blockförmigen Gummipuffers 44 stabilisierend gegenüber der Halteeinrichtung 10 verspannt wird. Zur Vergrößerung des Schwenkbereichs weist der Unterlenker 54 im Bereich des Befestigungsflanschs 78 eine entsprechende Ausnehmung 82 auf.

Ausgehend von der Darstellung in Fig. 2 führen die gewählten Geometrieverhältnisse des bogenförmigen Halteelements 12 letztlich dazu, dass der durch die Lage der Bolzenaufnahmeöffnung 28 des Zwischenstücks 22 definierte Anlenkpunkt der Hubspindel 60 nunmehr unterhalb der Längsachse 84 des Unterlenkers 54 zu liegen kommt. Dementsprechend lässt sich der Unterlenker 54 mittels der Halteeinrichtung 10 in eine von den Gegebenheiten des Hubmechanismus 56 des Dreipunktgeräteanbaus 50 unabhängige, darüber hinausgehend angehobene Stellung verbringen. Der dadurch geschaffene zusätzliche seitliche Freiraum im Bereich der Anhängerdeichsel 76 führt zu einer Erhöhung des zulässigen Knickwinkels und damit zu einer entsprechenden Verbesserung der Wendigkeit eines aus landwirtschaftlichem Traktor und Anhänger bestehenden Fahrzeuggespanns.

## Patentansprüche

1. Halteeinrichtung für einen Unterlenker eines Dreipunktgeräteanbaus eines landwirtschaftlichen Traktors, umfassend ein bogenförmiges Halteelement (12), das einen ersten Schenkel (14) mit einem Kupplungselement (16) zur Anbringung des Unterlenkers (54), einen zweiten Schenkel (18), und ein die beiden Schenkel (14, 18) verbindendes Zwischenstück (22) aufweist, **dadurch gekennzeichnet, dass** der zweite Schenkel (18) ein sich in Richtung des ersten Schenkels (14) erstreckendes Widerlager (20) aufweist, wobei das Zwischenstück (22) drehbeweglich derart an einer Hubspindel (60) des Dreipunktgeräteanbaus (50) befestigbar ist, dass das an dem zweiten Schenkel (18) vorgesehene Widerlager (20) bei an dem ersten Schenkel (14) angebrachtem Unterlenker (54) unter der Wirkung der Schwerkraft derart gegen eine Oberseite (80) der Hubspindel (60) gepresst wird, dass der Unterlenker (54) in einer vorgegebenen Hubstellung gehalten wird.

2. Halteeinrichtung nach Anspruch 1, **dadurch gekennzeichnet, dass** in dem Zwischenstück (22) eine Bolzenaufnahmeöffnung (28) zur Anbringung eines ösenförmigen Befestigungsendes (62) der Hubspindel (60) ausgebildet ist.

3. Halteeinrichtung nach Anspruch 1 oder 2, **dadurch gekennzeichnet, dass** es sich bei dem Kupplungselement (16) um eine Kupplungskugel (30) oder einen Kupplungsbolzen handelt, wobei die Kupplungskugel (30) oder der Kupplungsbolzen zur Anbringung des Unterlenkers (54) mittels eines an einem freien Ende (68) des Unterlenkers (54) angeordneten Fanghakens (70) oder Kugelauges dient.

4. Halteeinrichtung nach einem der Ansprüche 1 bis 3, **dadurch gekennzeichnet, dass** es sich bei dem Widerlager (20) um ein aus elastischem Material hergestelltes Federelement (46) handelt.

5. Halteeinrichtung nach Anspruch 4, **dadurch gekennzeichnet, dass** das Federelement als blockförmiger Gummipuffer (44) ausgebildet ist.

6. Halteeinrichtung nach einem der Ansprüche 1 bis 5, **dadurch gekennzeichnet, dass** das bogenförmige Halteelement (12) als einstückiges Guss- und/oder Schmiedeteil hergestellt ist.

## Claims

1. Holding device for a lower link of a three-point device attachment of an agricultural tractor comprising a curved holding element (12) which has a first limb (14) with a coupling element (16) for attaching the lower link (54), a second limb (18) and an intermediate piece (22) connecting the two limbs (14, 18), **characterized in that** the second limb (18) has an abutment (20) extending in the direction of the first limb (14), wherein the intermediate piece (22) is fastenable rotatably to a lifting spindle (60) of the three-point device attachment (50) in such a manner that, when the lower link (54) is attached to the first limb (14), the abutment (20) provided on the second limb (18) is pressed under the action of gravity against an upper side (80) of the lifting spindle (60) in such a manner that the lower link (54) is held in a predetermined lifting position.

2. Holding device according to Claim 1, **characterized in that** a bolt-receiving opening (28) for the attaching of an eye-shaped fastening end (62) of the lifting spindle (60) is formed in the intermediate piece (22).

3. Holding device according to Claim 1 or 2, **characterized in that** the coupling element (16) is a coupling ball (30) or a coupling bolt, wherein the coupling ball (30) or the coupling bolt serves for attaching the lower link (54) by means of a catch hook (70) or ball eye arranged at a free end (68) of the lower link (54).

4. Holding device according to one of Claims 1 to 3, **characterized in that** the abutment (20) is a spring element (46) produced from elastic material.

5. Holding device according to Claim 4, **characterized in that** the spring element is designed as a block-shaped rubber buffer (44).

6. Holding device according to one of Claims 1 to 5, **characterized in that** the curved holding element (12) is produced as an integral cast and/or forged part.

## Revendications

1. Dispositif de fixation pour une barre inférieure d'un attelage trois points d'un tracteur agricole, comprenant un élément de fixation en forme d'arc (12), qui présente une première branche (14) avec un élément de couplage (16) pour le placement de la barre inférieure (54), une deuxième branche (18), et une pièce intermédiaire (22) reliant les deux branches (14, 18), **caractérisé en ce que** la deuxième branche (18) présente un contre-appui (20) s'étendant en direction de la première branche (14), dans lequel la pièce intermédiaire (22) peut être fixée à une broche de levage (60) de l'attelage trois points (50) d'une façon mobile en rotation, de telle manière que le contre-appui (20) prévu sur la deuxième branche (18) soit pressé, lorsque la barre inférieure (54) est placée sur la première branche (14), sous l'action de la gravité contre un côté supérieur (80) de la broche de levage (60), de telle manière que la barre inférieure (54) soit maintenue dans une position de levage prédéterminée.

2. Dispositif de fixation selon la revendication 1, **caractérisé en ce qu'**une ouverture de réception de boulon (28) est formée dans la pièce intermédiaire (22) pour le placement d'une extrémité de fixation en forme d'oeillet (62) de la broche de levage (60).

3. Dispositif de fixation selon la revendication 1 ou 2, **caractérisé en ce que** l'élément de couplage (16) est une bille de couplage (30) ou un boulon de couplage, dans lequel la bille de couplage (30) ou le boulon de couplage sert pour le placement de la barre inférieure (54) au moyen d'un crochet de capture (70) ou d'un oeillet sphérique disposé sur une extrémité libre (68) de la barre inférieure (54).

4. Dispositif de fixation selon l'une quelconque des revendications 1 à 3, **caractérisé en ce que** le contre-appui (20) est un élément de ressort (46) fabriqué en un matériau élastique.

5. Dispositif de fixation selon la revendication 4, **caractérisé en ce que** l'élément de ressort est réalisé sous forme de tampon de caoutchouc (44) en forme de bloc.

6. Dispositif de fixation selon l'une quelconque des revendications 1 à 5, **caractérisé en ce que** l'élément de fixation en forme d'arc (12) est fabriqué sous la forme d'une pièce moulée et/ou forgée d'un seul tenant.
